# EUROPÄISCHE PATENTSCHRIFT

(11) **EP 3 616 987 B1**
(45) Veröffentlichungstag und Bekanntmachung des Hinweises auf die Patenterteilung: **17.02.2021**
(21) Anmeldenummer: 19192022.2
(22) Anmeldetag: 16.08.2019
(51) Int. Cl.: B60P 3/39, A47C 17/80, B60N 3/00

(54) **CAMPINGFAHRZEUG MIT BETT**
CAMPING VEHICLE WITH BED
VÉHICULE DE CAMPING POURVU DE LIT

(30) Priorität: 23.08.2018 DE 102018120546
(43) Veröffentlichungstag der Anmeldung: 04.03.2020
(73) Patentinhaber: Camposito GmbH & Co. KG, 92265 Edelsfeld (DE)
(72) Erfinder: Hartmann, Hans, 92265 Edelsfeld (DE)
(74) Vertreter: Schön, Christoph

(56) Entgegenhaltungen:
- EP-A1- 0 172 146
- EP-A1- 3 176 032
- DE-U1-202005 017 881
- DE-U1-202015 004 619

## Beschreibung

Die vorliegende Erfindung betrifft ein Campingfahrzeug mit einem Bett.

Die EP 0 172 146 A1 offenbart ein Bett, das aus zwei Strukturen gebildet ist, nämlich einer an jeder von zwei entgegengesetzten Wänden festen Struktur und einer gegenüber der festen Struktur und den Wänden beweglichen Struktur, indem die feste Struktur aus einem Bindemittel der beweglichen Struktur tragenden Streichbalken gebildet ist, während letztere aus einem Stützelement des ausgestreckten Bettes und aus einer Führung gebildet ist, in welcher die Anhäufungszapfen der das Bett mit der dazugehörigen Matratze bildenden Flächen laufen, wobei die Flächen von untereinander an den Enden scharnierten und die vorgenannten Führungs- und Laufzapfen tragenden Wangen getragen sind. Das rückgezogene Verschwindbett nimmt in der Höhe erfindungsgemäß nur einen kleinen Teil des vom Bett im ausgestreckten Zustand eingenommenen Raumes ein.

Die EP 3 176 032 A1 offenbart ein Reisefahrzeug, insbesondere ein Reisemobil, das mindestens einen Stauraum, der zur Aufnahme wenigstens eines Zweirads vorgesehen ist, und mindestens eine Bodenwandung, die einen Boden des zumindest einen Stauraums ausbildet, umfasst, wobei das Reisefahrzeug zumindest eine Reifenaufnahme umfasst, die zu einer Aufnahme zumindest eines Reifens des wenigstens einen Zweirads vorgesehen ist, wobei die zumindest eine Reifenaufnahme eine partielle Vertiefung in der zumindest einen Bodenwandung ausbildet.

Die DE 20 2015 004 619 U1 offenbart eine Vorrichtung zum Schlafen, Liegen oder Abstellen von Gegenständen, wobei zum Einbau und zum Betrieb der Vorrichtung keine baulichen Veränderungen an einem Fahrzeug erforderlich sind, die Vorrichtung einstückig, nicht klappbar und eben ist, im Nichtgebrauchszustand unter dem Dach bzw. der Decke des Fahrzeugs angeordnet und durch wenigstens ein Sicherungsmittel gegen eine Positionsveränderung gesichert ist und nach Lösen des Sicherungsmittels durch einen Hubmechanismus aus der Nichtgebrauchslage stufenlos höhenverstellbar in die Gebrauchslage herabgelassen werden kann, wo die Vorrichtung mit dem vorderen Bereich auf einer weiter vorne im Fahrzeug befindlichen Auflagefläche zur Auflage kommt, während der hintere Bereich der Vorrichtung von den Tragarmen gehalten wird.

Die DE 20 2005 017 881 U1 offenbart eine Automatratze, wobei die Oberfläche des Oberteils der Automatratze horizontal ausgefertigt ist und das Unterteil der Automatratze eine Form (Relief) aufweist, die nach dem Relief der umgeklappten Autositze ausgefertigt ist.

Bei Campingfahrzeugen stellt sich stets die Frage der optimalen Platzgestaltung, um unter den gegebenen eingeschränkten Raumbedingungen möglichst viele Funktionen ergonomisch bereitzustellen. Dabei betrachtet die vorliegende Erfindung bevorzugt Fahrzeuge, die eine Innenhöhe von bis zu ca. 1,85 m aufweisen, so dass eine mittelgroße Person gerade aufrecht stehen kann. In einer weiteren Ausführungsform betrifft die Erfindung ferner Fahrzeuge, die einen Innenraum aufweisen, der bis 1,50 m hoch ist und bevorzugt ca. 1,40 m beträgt. Bei diesen Campingfahrzeugen ist es besonders von Bedeutung, dass gleichzeitig eine Schlaffunktion und gleichzeitig möglichst viel Stauraum realisiert werden können. Folglich ist die Aufgabe der vorliegenden Erfindung, den Stand der Technik in dieser Hinsicht weiter zu entwickeln.

Diese Aufgabe wird mit den Merkmalen des Anspruchs 1 gelöst. Bevorzugte Weiterbildungen sind Gegenstand der abhängigen Ansprüche.

Ein Campingfahrzeug umfasst ein Bett, das in Bettlängsrichtung ein kopfseitiges Ende und ein fußseitiges Ende aufweist und das eine drei Bereiche umfassende Matratzenschicht umfasst, wobei die Matratzenschicht in Bettlängsrichtung in einem für die Aufnahme des Körperrumpfs einer im Bett liegenden Person vorgesehenen mittleren Bereich dicker ist als in den beiden Bereichen an dem kopf- und/oder dem fußseitigen Ende der Matratzenschicht. Die Länge des Bereichs des kopf- und/oder fußseitigen Endes der Matratzenschicht beträgt in Bettlängsrichtung bevorzugt jeweils mindestens 10% der Gesamtlänge, weiter bevorzugt mindestens 20% und insbesondere bevorzugt 30 bis 35% der Gesamtlänge. In einer bevorzugten Ausführungsform beträgt die Länge des Bereichs des kopfseitigen Endes der Matratzenschicht 10 bis 20%. Bei manchen Ausführungsformen kann die Länge des mittleren Bereichs 30 bis 45% und/oder die Länge des Bereichs am fußseitigen Ende in Bettlängsrichtung 15 bis 30%, beispielsweise die Länge des Bereichs am kopfseitigen Ende 30% und die Länge Bereichs des fußseitigen Endes 35% betragen. Es wurde erkannt, dass eine weiche Polsterung, die als ein unmittelbares Ergebnis der Dicke der Matratzenschicht angesehen werden kann, gerade in dem Bereich des Rumpfes einer das Bett benutzenden Person wichtig ist. Eine vergleichbar elastische, angenehme und weiche Lagerung ist in den Bereichen, in denen die Füße bzw. der Kopf zu liegen kommen, nicht so wichtig, da die Auflagekräfte im Bereich der Füße und Unterschenkel aufgrund des geringeren Gewichtsanteils geringer sind. Und im Kopfbereich ist eine weiche Lagerung auch deshalb weniger wichtig, da die auf einem solchen Bett liegenden Personen üblicherweise zusätzlich ein Kopfkissen verwenden. Hierdurch kann die Gesamtdicke der Matratzenschicht in bestimmten Bereichen in Bettlängsrichtung reduziert werden und der so gewonnene Raum kann als Stauraum unterhalb des Betts verwendet werden.

Die Matratzenschicht kann im mittleren Bereich aus mehreren Schichten bestehen, wie z.B. zwei oder mehr, bevorzugt drei Schichten, z.B. einer Obermatratze, einer zusätzlichen Untermatratze und einer Schicht aus Federelementen. In bevorzugten Ausführungsformen ist die Obermatratze mindestens 3 cm, bevorzugt 5 bis 15 cm, insbesondere 5 bis 10 cm dick und die Dicke der darunter liegenden Schicht(en) (Untermatratze und gegebenenfalls weitere Schichten, wie z.B. eine Schicht aus Federelementen) beträgt in der Summe ebenfalls mindestens 3 cm, bevorzugt 5 bis 15 cm und insbesondere 5 bis 10 cm. Die Höhe des Stauraums unter dem Bett beträgt erfindungsgemäß üblicherweise mindestens 50 cm, bevorzugt mindestens 60 cm. Und es bleibt so ausreichend viel Platz, dass man sich auf dem Bett aufrecht hinsetzen kann, denn üblicherweise wird das Bett in Richtung der Innenraumhöhe des Fahrzeugs so angeordnet, dass die Oberkante der Matratze sich bei 100 cm vom Fahrzeugboden befindet.

Insbesondere kann in einer bevorzugten Ausführungsform die Matratzenschicht einen Unterbau aufweisen, wobei die Matratzenschicht zusammen mit dem Unterbau einstückig anhebbar- und/oder verschiebbar ist. Der Unterbau kann insbesondere als eine Struktur oder ein Rahmen ausgestaltet sein, auf dem die Matratzenschicht aufliegt. Der Unterbau weist bevorzugt über die Bettlängsrichtung hinweg in einem dem mittleren Bereich der Matratzenschicht entsprechenden Bereich (=bettmittig in Bettlängsrichtung) eine Vertiefung auf, in die eine Verdickung der Matratzenschicht aufgenommen ist. Aufgrund dieses Aufbaus kann eine ebene Matratzenoberseite realisiert werden.

Bevorzugt kann die Matratzenschicht und/oder der Unterbau eine Länge von mindestens 1,85 m aufweisen, womit sichergestellt wird, dass die Matratzenschicht als Bett für eine normalgroße Person ausgelegt ist.

Vorteilhaft ist ferner, wenn an dem kopf- und/oder dem fußseitigen Ende des Betts unterhalb der Matratzenschicht ein Trägerelement angeordnet ist, welches gegen den Rest der Matratzenschicht, insbesondere den mittleren Bereich, so verschiebbar ist, dass zumindest ein Teil des Trägerelements in einem zusammengeschobenen Zustand in den für den Körperrumpf der Person vorgesehenen mittleren Bereich schiebbar ist. Das Trägerelement ist bevorzugt als eine Platte ausgeführt, die ggf. Führungs- und/oder Halteelemente umfassen kann. Entsprechend kann das Trägerelement eine Verlängerung der Auflagefläche für die Matratze darstellen. Diese Verlängerung ist insbesondere bei kleineren Fahrzeugen notwendig, so dass im Zustand, in dem das Bett nicht benötigt wird, ein Sitzbereich dort angeordnet sein kann, wo ansonsten dieses Trägerelement benötigt wird, wenn das Bett in einer Schlaffunktion realisiert ist.

Dabei kann in dem vorstehend genannten zusammengeschobenen Zustand ein Teil des Trägerelements sandwichartig zwischen Bereichen der Matratzenschicht zu liegen kommen. Dies gilt insbesondere bei einer Betrachtung in Matratzendickenrichtung. Hierdurch kann eine obere Matratzenebene erhalten werden, die selbst keine Dickenänderungen bzw. -abstufungen aufweist und diese Matratzenebene kann durch eine herkömmliche und somit üblicherweise kostengünstige Matratze gebildet werden.

Ferner ist es vorteilhaft, wenn unterhalb der Matratzenschicht ein Unterbau vorgesehen ist, der in einer Variante einstückig ist und sich über die gesamte Matratzenschicht erstreckt und in einer zweiten Variante einen verschiebbaren, schwenkbaren oder entnehmbaren Abschnitt, insbesondere ein Trägerelement, umfasst, und dieser Abschnitt unter das kopf- und/oder das fußseitige Ende bringbar ist. Dabei kann unter dem Unterbau ein Stauraum vorgesehen sein. Eine unterschiedliche Dicke der Matratzenschicht spiegelt sich bevorzugt an der Unterseite des Unterbaus wieder. Dadurch lässt sich der unter dem Bett befindliche Stauraum maximieren.

Insbesondere ist unterhalb der Matratzenschicht ein Stauraum vorgesehen, dessen Größe ausreichend ist, dass ein handelsübliches 28 Zoll-Fahrrad dort aufrecht stehen kann, wenn dessen Vorderrad demontiert ist. Das Verstauen eines Fahrrads stellt bei den Bauraumbegrenzungen eines hier beschriebenen Campingfahrzeugs eine besondere Schwierigkeit da. Alternativ kann der Stauraum auch für andere Aufgaben genutzt werden.

In einer bevorzugten Ausführungsform ist ein Bett mit der oben beschriebenen Matratzenschicht im hinteren Bereich des Fahrzeugs so angeordnet, dass es über einen Lagerpunkt drehbar ist und nach oben in den Kopfraum des Fahrzeugs hochgeschwenkt werden kann. Hierbei können beispielsweise links und rechts Drehfedern angebracht sein, die ein Hochschwenken erleichtern.

Nachfolgend wird die Erfindung anhand von bevorzugten Ausführungsformen beispielhaft erläutert. Es zeigen:
- Fig. 1: eine schematische Ansicht eines Campingfahrzeugs, das auf der Basis eines Kleintransporters gebaut ist, und ein Bett umfasst,
- Fig. 2: einen seitlichen Schnitt durch das Bett in Längsrichtung zur Veranschaulichung von dessen Matratzenschicht,
- Fig. 3: den Innenraum eines Campingfahrzeugs in einer Stellung, in der das Bett zugunsten einer Sitzposition im Fond verkleinert ist, und
- Fig. 4: den Innenraum des Campingfahrzeugs der Fig. 3 in einer Schlafstellung.

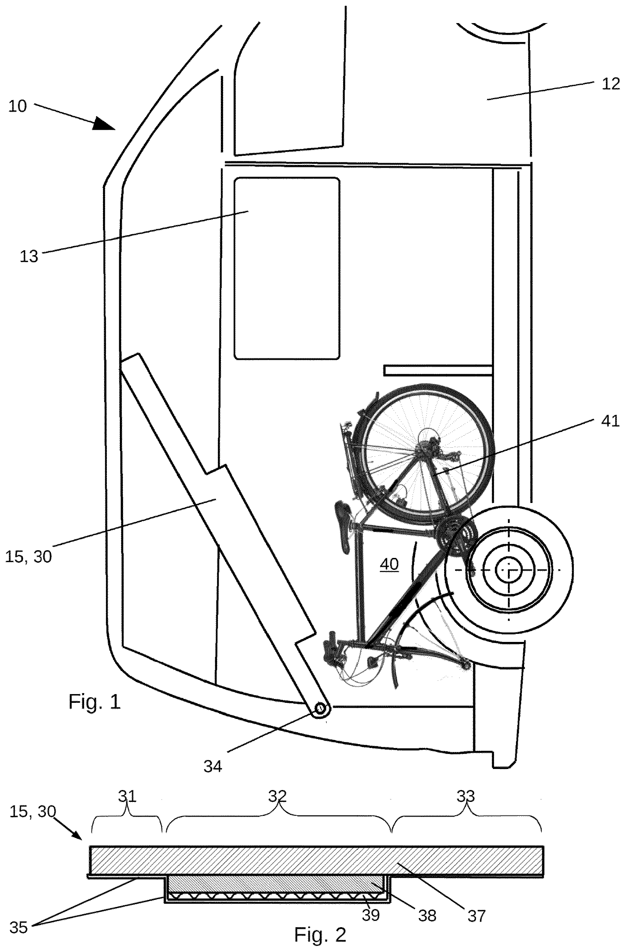

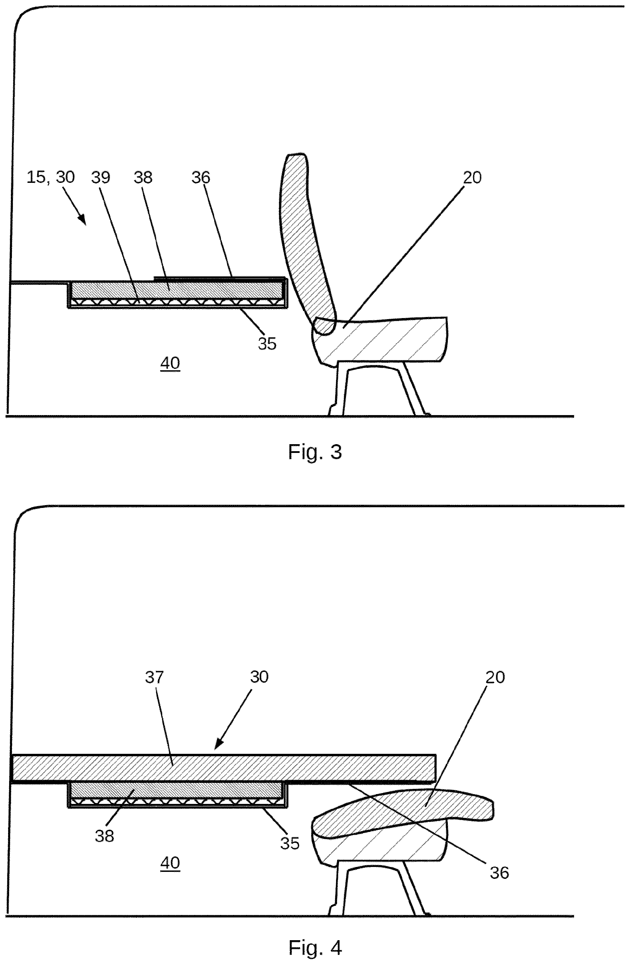

Fig. 1 zeigt ein Campingfahrzeug 10 in einer schematischen seitlichen Ansicht mit dessen mittleren und hinteren Bereich. Der vordere Bereich, also der Fahrerbereich 12 mit dem Lenkrad ist nur teilweise gezeigt. Dort, wo ein Fenster 13 gezeigt ist, also dem mittleren Bereich des Fahrzeugs ist eine Tür (nicht gezeigt) vorgesehen, über die man das Fahrzeug betreten kann, um u.a. zu z.B. zwei Sitzen 20 (siehe Fig. 3) zu gelangen. Im hinteren Bereich des Fahrzeugs ist ein Bett 15 gezeigt, welches über einen Lagerpunkt 34 drehbar ist und (wie gezeigt) hochgeschwenkt werden kann. In dem gezeigten Zustand kann ein Stauraum 40, der unter dem Bett 15 vorgesehen ist, gut erreicht werden. Im gezeigten Beispiel kann dort ein Fahrrad 41 verstaut werden. Das Fahrrad 41 ist mit Befestigungsmitteln (nicht gezeigt) am Boden und/oder der Seitenwand des Fahrzeugs befestigt. Zur Reduzierung seiner Größe wurde am Fahrrad 41 das Vorderrad entfernt. Zudem wurde der Sattel herabgeschoben. Beides geschieht üblicherweise durch jeweils nur einen Handgriff. Wie in Fig. 1 ersichtlich, besitzt das Fahrrad im Bereich des Lenkers trotz des Ausbaus des Vorderrads vorne seine größte Höhe. Wenn das Bett 15 um den Lagerpunkt 34 herabgeschwenkt wird, so kommt dessen Liegefläche in eine horizontale Position. Dabei ist es wesentlich, dass oberhalb der Liegefläche möglichst viel freier Raum ist, dass eine Person im Bett aufrecht sitzen kann. Um diesen Raum zu maximieren, ist die Matratzenschicht 30 ungleichmäßig dick ausgebildet. Es wurde nämlich erkannt, dass in einem Bereich, in dem der Rumpf der Person und somit das Hauptgewicht zu liegen kommt, eine weichere Liegefläche notwendig ist als im Kopf- und/oder Fußbereich. Nicht gezeigte Drehfederelemente unterstützen das Hochschwenken des Betts in die gezeigte schräge Position. In dieser Position sind Haltemittel vorgesehen, um das Bett so zu halten.

Dementsprechend wurde die in Fig. 2 näher gezeigte Dickenverteilung der Matratzenschicht in Bettlängsrichtung gewählt. Das Bett 15 und insbesondere dessen Matratzenschicht 30 umfasst eine Obermatratze 37, die über ihre gesamte Länge die gleiche Dicke aufweisen kann. Sie kann bspw. aus einem (quaderförmigen) Schaumstoffmaterial gefertigt sein. Im Kopfbereich 31 des Bettes und dessen Fußbereich 33 kann außer der Obermatratze 37 keine weitere Matratze und/oder Federung vorgesehen sein. Im mittleren Bereich 32 ist unter der Obermatratze 37 eine weitere (elastische) Schicht zur Erzielung eines weicheren Liegens angeordnet. Diese Schicht kann einstückig sein oder, wie in Fig. 2 gezeigt, aus mehreren Schichten bestehen, wie z.B. zwei Schichten, nämlich einer Untermatratze 38 und einer Schicht aus Federelementen 39. Diese Federelementschicht 39 kann bspw. Federkernelemente umfassen und die darüber liegende Schicht 38 kann aus einem Material einer höheren Festigkeit als die Obermatratze 37 bestehen, um so die Kräfte zu verteilen. Durch die geringere Dicke des Betts 15 am Kopfende 31 wird darunter ein freier Bereich geschaffen, in dem bspw. der Lenker eines Fahrrads aufgenommen werden kann. Anstelle des Fahrrads können hier beliebige andere Dinge angeordnet werden. Durch den sich in Richtung des Hecks des Fahrzeugs 10 in Höhenrichtung vergrößernden Stauraum 40 in Fahrzeughöhenrichtung kann dieser von dem Anwender zudem besser erreicht werden. Der Vorteil der besseren Zugänglichkeit des Stauraums 40 ist auch am Fußende 33 des Betts gegeben, wobei aber erfindungsgemäß eine Verringerung der Dicke der Matratzenschicht 30 am Kopf- oder Fußende ausreichend sein kann. Die Ausführungsformen mit einem hoch klappbarem Bett werden vor allem bei Fahrzeugen mit einem höheren Innenraum, wie z.B. größer als 1,80 m Innenhöhe zur Anwendung kommen können. Bei dieser Variante kann die Oberkante des Betts auf 100 cm liegen. So ist die Höhe des Stauraums unter dem Bett bei dieser Version knapp 90 cm.

In Figuren 3 und 4 ist eine alternative Ausführungsform der Erfindung gezeigt, bei der das Bett im Wesentlichen ortsfest am Fahrzeug angebracht sein kann und/oder anders als bislang beschrieben, selbst nicht schwenkbar sein kann. Diese Ausführungsform eignet sich insbesondere für niedrige Fahrzeuge mit einer Innenhöhe von kleiner als 1,60 m, wie z.B. 1,40 m. In Fig. 4 ist ein Bett 15 gezeigt, das eine Matratzenschicht 15 umfasst, die identisch zur vorstehenden Ausführungsform gemäß Fig. 2 sein kann. Um das Bett in die hier gezeigte Position zu bringen, wird ein Sitz 20 (bzw. eine Sitzreihe) mit seiner/ihrer Rückenlehne nach vorne geklappt, um einen freien Raum für ein Trägerelement 36 zu schaffen. Das Trägerelement 36 ist bevorzugt lediglich ein Brett, das in Fahrzeuglängsrichtung verschiebbar ist und wird an oder benachbart zu den Seitenwänden des Fahrzeugs über Führungen geführt. Statt der Führungen können auch einzelne Haltepunkte, wie z.B. Zapfen vorgesehen sein. Diese leiten bevorzugt entsprechende Gewichtskräfte ab. Um das Bett von der in Fig. 4 gezeigten Verwendungsposition, in der das Bett benutzt wird, in die in Fig. 3 gezeigte Verwendungsposition, in der die Sitze im Fond genutzt werden, umzubauen, wird das Trägerelement über einen unteren Teil der Matratze, z.B. zwischen die Untermatratze 38 und die Obermatratze 37 geschoben. Der Fußbereich der Obermatratze 37 kann hochgeklappt oder hochgerollt werden, um so den benötigten Platz für die aufrechte Rückenlehne (siehe Fig. 3) des Sitzes 20 zu schaffen. In Fig. 3 ist aus Gründen der Übersichtlichkeit dabei die Obermatratze 37 nicht gezeigt. Sie kann in diesem Zustand zumindest an ihrem Fußbereich aufgerollt sein oder im Übergang von dem Mitten- zu dem Fußbereich eine Faltstelle umfassen. Bei dieser Variante kann die Höhe des Stauraums am Kopf- und/oder Fußende ca. 58 cm betragen.

Beispielsweise kann die Dicke der Obermatratze 37 z.B. 5 bis 15 cm betragen und die Dicke der Summe der Untermatratze und des Federelementschicht 39 kann ebenfalls 5 bis 15 cm betragen. Bei bevorzugten Ausführungsformen ist die Obermatratze 37 mindestens 5 cm dick und die Dicke der darunter liegenden Schicht(en) 38+39 beträgt in der Summe ebenfalls mindestens 5 cm. Die Höhe des Stauraums beträgt mindestens 50 cm, bevorzugt mindestens 60 cm. Es kann auch das Kopfteil gesondert hochgeklappt werden. In diesem Fall ist ein Gelenk am Übergang vom Kopf- zu dem Rumpfbereich vorgesehen.

### Bezugszeichen:

10 Campingfahrzeug
12 Fahrerbereich
13 Fenster
15 Bett
20 Sitz
30 Matratzenschicht
31 kopfendseitiger Bereich, Kopfende
32 mittlerer Bereich
33 fußendseitiger Bereich, Fußende
34 Lagerpunkt, Drehpunkt
35 Unterbau
36 Trägerelement
37 Obermatratze
38 Untermatratze
39 Federelement
40 Stauraum

## Patentansprüche

1. Campingfahrzeug (10) mit einem Bett, das in Bettlängsrichtung ein kopfseitiges Ende und ein fußseitiges Ende aufweist und das eine drei Bereiche umfassende Matratzenschicht (30) umfasst, **dadurch gekennzeichnet, dass** die Matratzenschicht (30) in Bettlängsrichtung in einem für die Aufnahme des Körperrumpfs einer im Bett liegenden Person vorgesehenen mittleren Bereich (32) dicker ist als in den beiden Bereichen an dem kopf- und/oder dem fußseitigen Ende (31, 33) der Matratzenschicht.

2. Campingfahrzeug (10) gemäß Anspruch 1, **dadurch gekennzeichnet, dass** die Matratzenschicht (30) einen Unterbau (35) aufweist, wobei die Matratzenschicht (30) zusammen mit einem Unterbau (35) einstückig anhebbar- und/oder verschiebbar ist.

3. Campingfahrzeug (10) gemäß Anspruch 1 oder 2, **dadurch gekennzeichnet, dass** die Matratzenschicht (30) und/oder der Unterbau (35) eine Länge von mindestens 1,85 m aufweisen.

4. Campingfahrzeug (10) gemäß Anspruch 1, **dadurch gekennzeichnet, dass** an dem kopf- und/oder dem fußseitigen Ende des Betts unterhalb der Matratzenschicht (30) ein Trägerelement (36) angeordnet ist, welches gegen den Rest der Matratzenschicht (30) so verschiebbar ist, dass zumindest ein Teil des Trägerelements (36) in einem zusammengeschobenen Zustand in den für den Körperrumpf der Person vorgesehenen Bereich schiebbar ist.

5. Campingfahrzeug gemäß Anspruch 4, **dadurch gekennzeichnet, dass** in einem zusammengeschobenen Zustand ein Teil des Trägerelements (36) sandwichartig zwischen Bereichen der Matratzenschicht (30) zu liegen kommt.

6. Campingfahrzeug gemäß einem der vorangegangenen Ansprüche, **dadurch gekennzeichnet, dass** unterhalb der Matratzenschicht ein Unterbau (35, 36) vorgesehen ist, der in einer Variante (35) einstückig ist und sich über die gesamte Matratzenschicht (30) erstreckt und in einer zweiten Variante einen verschiebbaren, schwenkbaren oder entnehmbaren Abschnitt, insbesondere ein Trägerelement (36) umfasst, der unter das kopf- und/oder das fußseitige Ende bringbar und unter dem Unterbau (35) ein Stauraum vorgesehen ist und sich eine unterschiedliche Dicke der Matratzenschicht (30) an der Unterseite des Unterbaus (35) wiederspiegelt.

7. Campingfahrzeug (10) gemäß einem der vorangegangenen Ansprüche, **dadurch gekennzeichnet, dass** unterhalb der Matratzenschicht (30) ein Stauraum (40) vorgesehen ist, dessen Höhe mindestens 50 cm beträgt.

8. Campingfahrzeug (10) gemäß einem der vorangegangenen Ansprüche, **dadurch gekennzeichnet, dass** unterhalb der Matratzenschicht (30) ein Stauraum (40) vorgesehen ist, dessen Größe ausreichend ist, dass ein handelsübliches 28 Zoll-Fahrrad (41) dort aufrecht stehen kann, wenn dessen Vorderrad demontiert ist.

## Claims

1. Camping vehicle (10) with a bed, which, as seen in the longitudinal direction of the bed, comprises a head end and a foot end, and which comprises a mattress layer (30) with three areas,
**characterized in that**
the mattress layer (30), as seen in the longitudinal direction of the bed, is thicker in a central area (32) intended to accommodate the torso of a person lying in the bed than it is in the two areas at the head end and/or the foot end (31, 33) of the mattress layer.

2. Camping vehicle (10) according to claim 1, **characterized in that** the mattress layer (30) comprises a base structure (35), wherein the mattress layer (30) can be raised and/or shifted as a single unit jointly with the base structure (35).

3. Camping vehicle (10) according to claim 1 or claim 2, **characterized in that** the mattress layer (30) and/or the base structure (35) has a length of at least 1.85 m.

4. Camping vehicle (10) according to claim 1, **characterized in that**, at the head end and/or at the foot end of the bed, a support element (36) is arranged underneath the mattress layer (30), which support element can be shifted with respect to the remainder of the mattress layer (30) in such a way that at least part of the support element (36), in a collapsed state, is shiftable into the area intended for the torso of the person.

5. Camping vehicle according to claim 4, **characterized in that**, in a collapsed state, part of the support element (36) comes to rest in a sandwich-like manner between areas of the mattress layer (30).

6. Camping vehicle according to one of the preceding claims, **characterized in that**, underneath the mattress layer, a base structure (35, 36) is provided, which, in one variant (35), is a one-piece unit and extends over the entire mattress layer (30),
and which, in a second variant, comprises a shiftable, pivotable, or removable section, in particular a support element (36), which (section) can be brought under the head end and/or the foot end and wherein a storage space is provided under the base structure (35) and wherein the varying thickness of the mattress layer (30) is reflected in the bottom surface of the base structure (35).

7. Camping vehicle (10) according to one of the preceding claims, **characterized in that**, underneath the mattress layer (30), a storage space (40) is provided, which has a height of at least 50 cm.

8. Camping vehicle (10) according to one of the preceding claims, **characterized in that**, underneath the mattress layer (30), a storage area (40) is provided, which is large enough that a standard 28-inch bicycle (41) can stand upright therein after its front wheel has been removed.

## Revendications

1. Véhicule de camping (10) pourvu de lit, qui comporte une extrémité côté tête et une extrémité côté pieds dans la direction longitudinale du lit et comprend une couche de matelas (30) comprenant trois zones, **caractérisé en ce que**
la couche de matelas (30) dans la direction longitudinale du lit dans une zone centrale (32) prévue pour loger le tronc d'une personne allongée dans le lit est plus épaisse que dans les deux zones aux extrémités de tête et/ou de pieds (31, 33) de la couche de matelas.

2. Véhicule de camping (10) selon la revendication 1, **caractérisé en ce que** la couche de matelas (30) comporte une infrastructure (35), sachant que la couche de matelas (30) peut être relevée et/ou déplacée en une pièce ensemble avec une infrastructure (35).

3. Véhicule de camping (10) selon la revendication 1 ou 2, **caractérisé en ce que** la couche de matelas (30) et/ou l'infrastructure (35) comportent une longueur d'au moins 1,85 m.

4. Véhicule de camping (10) selon la revendication 1, **caractérisé en ce qu'**aux extrémités côté tête et/ou côté pieds du lit un élément de support (36) est disposé en dessous de la couche de matelas (30), lequel peut être déplacé par rapport au reste de la couche de matelas (30) de telle manière qu'au moins une partie de l'élément de support (36) peut être déplacé dans un état replié dans la zone prévue pour le tronc de la personne.

5. Véhicule de camping selon la revendication 4, **caractérisé en ce que** dans un état replié, une partie de l'élément de support (36) vient se poser en sandwich entre les zones de la couche de matelas (30).

6. Véhicule de camping selon l'une quelconque des revendications précédentes, **caractérisé en ce qu'**en dessous la couche de matelas est prévue une infrastructure (35, 36), qui est en une pièce dans une variante (35) et s'étend sur toute la couche de matelas (30) et
comprend dans une deuxième variante une section déplaçable, pivotable ou amovible, en particulier un élément de support (36), qui peut être mis sous l'extrémité côté tête et/ou côté pieds et un espace de rangement est prévu sous l'infrastructure (35) et une épaisseur différente de la couche de matelas (30) se reflète sur la face inférieure de l'infrastructure (35).

7. Véhicule de camping (10) selon l'une quelconque des revendications précédentes, **caractérisé en ce qu'**en dessous la couche de matelas (30) est prévu un espace de rangement (40), dont la hauteur est au moins de 50 cm.

8. Véhicule de camping (10) selon l'une quelconque des revendications précédentes, **caractérisé en ce qu'**en dessous la couche de matelas (30) est prévu un espace de rangement (40) dont la taille est suffisante pour pouvoir y placer debout une bicyclette de 28 pouces (41) courante dans le commerce, si la roue avant de celle-ci est démontée.
